# EUROPÄISCHE PATENTSCHRIFT

(11) **EP 3 564 787 B1**
(45) Veröffentlichungstag und Bekanntmachung des Hinweises auf die Patenterteilung: **16.12.2020**
(21) Anmeldenummer: 19171380.9
(22) Anmeldetag: 26.04.2019
(51) Int. Cl.: G06F 3/01, G06F 3/03

(54) **VERFAHREN ZUR INTERAKTION EINER ZEIGEVORRICHTUNG MIT EINEM AUF EINER PROJEKTIONSFLÄCHE EINES VIRTUELLEN DESKTOPS ANGEORDNETEN ZIELPUNKT SOWIE HIERZU EINGERICHTETE ZEIGEVORRICHTUNG**
METHOD FOR INTERACTION OF A POINTING DEVICE WITH A TARGET ON A PROJECTION SURFACE OF A VIRTUAL DESKTOP AND POINTING DEVICE FOR SAME
PROCÉDÉ D'INTERACTION D'UN DISPOSITIF DE POINTAGE AVEC UN POINT CIBLE DISPOSÉ SUR UN BUREAU VIRTUEL AINSI QUE DISPOSITIF DE POINTAGE CONÇU À CET EFFET

(30) Priorität: 30.04.2018 DE 102018206676
(43) Veröffentlichungstag der Anmeldung: 06.11.2019
(73) Patentinhaber: Deutsche Bahn AG, 10785 Berlin (DE)
(72) Erfinder: Rode, Oliver, 60598 Frankfurt am Main (DE)

(56) Entgegenhaltungen:
- US-A1- 2015 077 435
- US-A1- 2015 153 833
- US-A1- 2016 286 190
- US-A1- 2016 320 846
- US-A1- 2017 371 405
- Artur Sagitov ET AL: "ARTag, AprilTag and CALTag Fiducial Marker Systems: Comparison in a Presence of Partial Marker Occlusion and Rotation :", Proceedings of the 14th International Conference on Informatics in Control, Automation and Robotics, 1 January 2017 (2017-01-01), pages 182-191, XP055590736, DOI: 10.5220/0006478901820191 ISBN: 978-989-7582-64-6

## Beschreibung

Die Erfindung betrifft ein Verfahren zur Interaktion einer Zeigevorrichtung mit einem auf einer Projektionsfläche eines virtuellen Desktops angeordneten Zielpunkt.

Zeigegeräte als Eingabegeräte zur Interaktion eines Benutzers mit grafischen Benutzeroberflächen sind in großer Zahl aus dem Stand der Technik bekannt, wobei sich deren Ausführungsarten je nach Nutzungskontext und technischem Konzept der Benutzeroberflächen unterscheiden. Übliche Zeigegeräte, wie z.B. Trackball, Lichtgriffel, Grafiktablett, Joystick, Computer-Maus oder Touchscreen bzw. Touchpad sind in erster Linie für eine Interaktion des Benutzers mit einem realen Computer-Bildschirm konzipiert. US 2016/0320846 A1 schlägt ein kamerabasiertes Bildverarbeitungssystem vor, welches dazu eingerichtet ist, die relative Ausrichtung zweier Finger einer menschlichen Hand zueinander zu filmen und bei Vorliegen zweier voneinander eindeutig unterscheidbarer Stellungen einen Schaltzustand zu erzeugen. Auf diese Weise lässt sich eine Computer-Maus dadurch ersetzen, dass zwei Finger einer Hand in bestimmte Stellungen zueinander gebracht werden, so dass beispielsweise ein Zusammendrücken zweier Finger einen ersten Schaltzustand und das Spreizen der beiden Finger einen zweiten Schaltzustand repräsentieren.
Aus US 2015/0153833 A1 ist ein Verfahren zur Gestensteuerung eines Computers mittels eines Bildgebungssystems für Entfernungsmessungen bekannt, bei dem die dreidimensionale Punktewolke einer menschlichen Hand aufgenommen wird sowie hieraus singuläre Punkte der Hand (wie z.B. Fingerspitzen oder die Handflächen-Mitte) extrahiert und einer Bewegungsanalyse unterzogen werden.
Für die Interaktion eines Benutzers mit einem virtuellen Desktop ist aus dem Stand der Technik die sogenannte "Wii-Fernbedienung" bekannt, welche in Zusammenhang mit Computerspielen bzw. Anwendungen auf der sog. "Wii®-Plattform" des Herstellers Nintendo zum Einsatz kommen. Bei dieser werden Beschleunigungswerte (welche durch den Benutzer mittels Drehen oder translatorischem Schütteln der Fernbedienung erzeugt werden) erfasst und an die Steuerungseinrichtung des Ausgabegerätes (hier: den Game-Controller der Wii®-Plattform) übertragen. Es sind in diesem Zusammenhang auch Eingabegeräte bekannt, bei denen eine Kamera Zeigebewegungen eines Spiel-Teilnehmers erfasst und an die Steuerungseinrichtung des Ausgabegerätes überträgt. Des Weiteren ist im Zusammenhang mit sog. Datenbrillen, bei denen mittels eines Computersystems generierte Dateninhalte auf eine im Blickfeld des Brillenträgers ausgerichtete Oberfläche projiziert werden, ein physisch in die Datenbrille integriertes Eingabegerät bekannt, bei dem eine Zeigevorrichtung durch Neigungsänderungen der Datenbrille bzw. des Kopfes des menschlichen Benutzers auf einen Zielpunkt auf der Projektionsfläche ausgerichtet wird und durch Betätigen eines am Gestell der Datenbrille angeordneten Knopfes bzw. Tasters eine Aktivierung (oder sonstige Benutzerhandlung) in Bezug auf den anvisierten Zielpunkt ausgelöst wird

US 2015/077435 A1 und Artur Sagitov ET AL: "ARTag, AprilTag and CALTag Fiducial Marker Systems: Comparison in a Presence of Partial Marker Occlusion and Rotation :",Proceedings of the 14th International Conference on Informatics in Control, Automation and Robotics, 1. Januar 2017 (2017-01-01), Seiten 182-191, XP055590736, beschreiben ebenfalls relevanten Stand der Technik.

Nachteilig hieran ist, dass der Benutzer solcher Zeigevorrichtungen bisweilen stets sehr stark ausgeprägte körperliche Bewegungen durchführen muss, um eine Ausrichtung der Zeigevorrichtung auf einen gewünschten Zielpunkt zu bewirken. Dies gilt insbesondere wenn sich dieser Zielpunkt in einem Randbereich der Projektionsfläche befindet. Dies ist zum einen für den Benutzer unbequem und trifft auf gesellschaftliche Akzeptanzprobleme in der Öffentlichkeit. Zudem ist das Betätigen eines Bestätigungsknopfes bzw. einer Bestätigungstaste an der Datenbrille umständlich. Im Ergebnis führt dies dazu, dass die Akzeptanz virtueller Desktops im Allgemeinen und von Datenbrillen im Besonderen gering ist und deren stärkere Verbreitung behindert.

Der Erfindung liegt daher die Aufgabe zugrunde, ein Verfahren zur Interaktion einer Zeigevorrichtung mit einem auf einer Projektionsfläche eines virtuellen Desktops angeordneten Zielpunkt bereitzustellen, welche diese Nachteile des Standes der Technik überwindet. Die Interaktion soll in weniger auffälliger Weise und mit einfachen Körperbewegungen möglich sein.

Erfindungsgemäß wird diese Aufgabe in verfahrensorientierter Weise in Verbindung mit dem Oberbegriff des Patentanspruches 1 dadurch gelöst, dass die Raumkoordinate des Zielpunkts mittels eines Bildverarbeitungssystems aus einem auf einer der Zeigevorrichtung zugehörigen Trägerebene aufgebrachten zweidimensionalen optischen Code ermittelt und als Ansteuergröße an eine Ansteuereinheit der Projektionsfläche übermittelt wird, wobei in einem ersten Verfahrensschritt mittels des Bildverarbeitungssystems die räumliche Lage eines senkrecht auf dem Flächenschwerpunkt des Codes stehenden Normalenvektors ermittelt wird, der Normalenvektor in einem zweiten Verfahrensschritt durch Verschieben und Kippen der Trägerebene auf den Zielpunkt ausgerichtet wird, und in einem dritten Verfahrensschritt mittels des Bildverarbeitungssystems eine Rotationsbewegung der Trägerebene um eine zur Trägerebene senkrechte Drehachse erfasst und in Abhängigkeit von einer erfassten Rotationsbewegung ein Aktivierungssignal der Zeigevorrichtung erzeugt wird.
Unter "Raumkoordinaten" sind in diesem Zusammenhang jegliche Art von Daten zur Bezeichnung einer absoluten oder relativen räumlichen Position des Zielpunkts zu verstehen.

Auf diese Weise kann die Interaktion der Zeigevorrichtung mit dem Zielpunkt mittels eines einfachen, im Wesentlichen zweidimensionalen Trägermediums erfolgen, auf welchem ein maschinenlesbarer zweidimensionaler Code aufgebracht ist, und welches mittels einfacher Handbewegungen durch translatorisches Verschieben entlang einer zur Trägerebene parallelen Achse sowie durch rotatorisches Verkippen um eine Kippachse derart ausrichtbar ist, dass die Spitze eines Vektors, dessen räumliche Ausrichtung durch den im ersten Verfahrensschritt ermittelten Normalenvektor im Flächenschwerpunkt der vom Code eingenommenen Fläche und dessen Spitze (und damit auch dessen Länge vom Startpunkt) durch den anzusteuernden und somit vorgegebenen Zielpunkt auf der Projektionsfläche bestimmt ist, auf den anzusteuernden Zielpunkt zeigt und mit diesem übereinstimmt. Durch eine zusätzliche Gestenbewegung in Form einer Rotationsbewegung der Trägerebene um eine zur Trägerebene senkrechte Drehachse ist ein Aktivierungssignal der Zeigevorrichtung erzeugbar.
Diese zusätzliche Gestenbewegung ist mit derselben Hand und aus demselben Bewegungsablauf wie das im ersten Verfahrensschritt vorgesehene Ausrichten der Trägerebene auf den Zielpunkt durchführbar. Beide Bewegungssequenzen sind ohne besondere Schwierigkeiten und weitergehende körperliche Aktivitäten für jedermann gleichsam "aus dem Handgelenk" heraus realisierbar. Die Bedienung des Zeigegerätes und damit die Interaktion mit dem Zielpunkt sind in einer gegenüber dem vorbekannten Stand der Technik deutlich einfacheren Weise mit weniger stark ausgeprägten Körperbewegungen möglich.

Unter einem "Aktivierungssignal" ist in diesem Zusammenhang jegliche Art von Signal zu verstehen, welches von der Zeigevorrichtung erzeugt und an die Steuerungseinrichtung der Projektionsfläche gesendet wird, in welcher es eine mit dem Zielpunkt logisch oder physisch verknüpfte Zustandsänderung bewirkt. Dies kann sowohl eine Markierung oder Hervorhebung des Zielpunktes auf der Projektionsfläche als auch das Öffnen eines mit dem Zielpunkt logisch verknüpften Kontext-Menüs oder das Starten einer mit dem Zielpunkt logisch verknüpften Computer-Anwendung bzw. eines Computer-Programms umfassen.
Unter einer "Geste" ist in diesem Zusammenhang jegliche Art von Handbewegung zu verstehen, mittels der das Trägermedium als solches relativ zu seiner Umgebung bewegt wird.

In weiterhin bevorzugter Weise kann das erfindungsgemäße Verfahren vorsehen, dass im dritten Verfahrensschritt zusätzlich die Drehrichtung der Rotationsbewegung der Trägerebene des Codes um eine zur Trägerebene senkrechte Drehachse erfasst und in Abhängigkeit von der erfassten Drehrichtung der Rotationsbewegung unterschiedliche Aktivierungssignale der Zeigevorrichtung erzeugbar sind. Auf diese Weise ist es in besonders einfacher Weise möglich, mittels derselben Gestenbewegung zwei unterschiedliche Aktivierungssignale zu erzeugen, die in logischer und / oder physischer Beziehung zum selben Zielpunkt stehen. Diese Aktivierungssignale können beispielsweise das Markieren des Zielpunkts auf der Projektionsfläche oder das Öffnen eines mit dem Zielpunkt logisch verknüpften Kontext-Menüs sein. Auf diese Weise kann man erfindungsgemäß Schaltereignisse erzeugen, die der Betätigung der rechten oder linken Taste einer herkömmlichen Computer-Maus entsprechen.

Die vorliegende Erfindung wird nachfolgend anhand eines Ausführungsbeispiels und dazugehöriger Zeichnungen näher erläutert. Es zeigen:

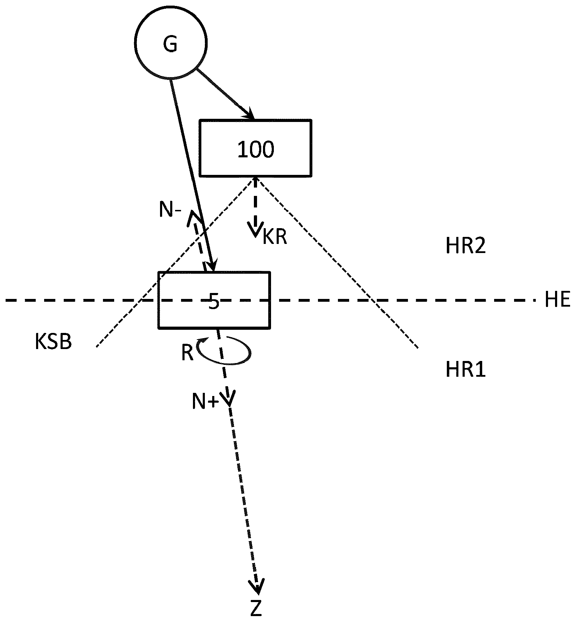

Figur 1: schematischer Aufbau zur Durchführung des erfindungsgemäßen Verfahrens

Figur 1 zeigt eine schematische Darstellung des erfindungsgemäßen Ansteuerungsverfahrens. Ein Gestengeber (G) verfügt über eine Musterkarte (5), welche einseitig mit einem maschinenlesbaren zweidimensionalen Code bedruckt ist. Die Musterkarte (5) (bzw. konkreter: die den Code tragende Oberfläche der Musterkarte) definiert eine Trägerebene (HE). Alternativ zu einer Musterkarte kann auch ein elektronisches Display als Trägermedium für den Code vorgesehen sein.
Eine einem Bildverarbeitungssystem zugehörige Kamera (100) verfügt in an sich bekannter Weise über einen Sichtbereich (KSB), der im Wesentlichen durch die Blickrichtung bzw. optische Achse (KR) der Kamera bestimmt ist. Die Blickrichtung der Kamera (100) ist vom Gestengeber (G) wegzeigend ausgerichtet. Dies könnte beispielsweise der Fall sein, wenn der Gestengeber mit einer ersten Hand die (z.B. in ein Smartphone integrierte) Kamera und mit einer zweiten Hand das Trägermedium (5) des Codes hält und die Kamera auf den Code richtet.
Der Gestengeber (G) definiert sodann mittels der Musterkarte (5) einen virtuellen Vektor, welcher ausgehend vom Flächenschwerpunkt des auf der Kamerazugewandten Oberfläche der Musterkarte aufgebrachten Codes hin zur Raumkoordinate (Z) eines auf einer Projektionsfläche eines virtuellen Desktops angeordneten Zielpunkts zeigt. Hierzu wird in einem ersten Verfahrensschritt ein senkrecht auf der vom Code auf der Trägerebene (HE) eingenommenen Fläche stehender Normalenvektor (N+) ermittelt. In einem zweiten Verfahrensschritt wird die Musterkarte (5) so im Raum verlagert (z.B. durch Kippen oder zur Trägerebene (HE) paralleles Verschieben), dass der Normalenvektor (N+) in Richtung auf die Raumkoordinate (Z) des Zielpunkts ausgerichtet ist. Die Länge dieses Vektors ergibt sich aus dessen Schnittpunkt mit der Projektionsfläche des virtuellen Desktops im Zielpunkt. Sowohl der Zielpunkt als auch der Vektor sind im Sichtbereich einer Datenbrille eingeblendet. Das erfindungsgemäße Verfahren ermöglicht es dem Träger der Datenbrille, diesen Zielpunkt auf der Projektionsfläche des in den Sichtbereich der Datenbrille integrierten virtuellen Desktops anzusteuern, beispielsweise mittels einer in ein Smartphone integrierten Kamera, deren Sichtbereich auf die Musterkarte (5) bzw. den auf dieser angebrachten Code ausgerichtet ist und welche durch den Bediener in erfindungsgemäßer Weise zur Ausrichtung des auf den Zielpunkt gerichteten Vektors gehandhabt werden.
In einem dritten Verfahrensschritt wird mittels der Kamera (100) bzw. des Bildverarbeitungssystems eine Rotationsbewegung (R) der Trägerebene (HE) um eine zur Trägerebene senkrechte Drehachse erfasst und in Abhängigkeit hiervon ein Aktivierungssignal der Zeigevorrichtung erzeugt. Durch zusätzliches Erfassen der Drehrichtung dieser Rotationsbewegung (R) können zwei unterschiedliche Aktivierungssignale erzeugt werden. Auf diese Weise realisiert der Benutzer mittels der erfindungsgemäßen Zeigevorrichtung zwei unterschiedliche Schaltereignisse. Beispielsweise kann er den Zielpunkt auf der Projektionsoberfläche mittels des erfindungsgemäßen Verfahrens bzw. der erfindungsgemäßen Vorrichtung markieren und ein Kontext-Menü, das ihm weitere in Bezug auf den Zielpunkt relevante Informationen auf dem virtuellen Desktop anzeigt.

### Bezugszeichenliste

- G: Gestengeber
- 5: Musterkarte
- HE: Trägerebene
- HR1: erster Halbraum
- HR2: zweiter Halbraum
- 100: Kamera
- KR: optische Achse der Kamera
- KSB: Sichtbereich der Kamera
- N-: in den ersten Halbraum (HR1) gerichteter Normalenvektor
- N+: in den zweiten Halbraum (HR2) gerichteter Normalenvektor
- R: Rotationsbewegung
- Z: Raumkoordinate des Zielpunkts

## Patentansprüche

1. Verfahren zur Interaktion einer Zeigevorrichtung (5) mit einem auf einer Projektionsfläche eines virtuellen Desktops angeordneten Zielpunkt (Z),
**dadurch gekennzeichnet, dass**
die Raumkoordinate des Zielpunkts (Z) mittels eines Bildverarbeitungssystems (100) aus einem auf einer der Zeigevorrichtung (5) zugehörigen Trägerebene (HE) aufgebrachten zweidimensionalen optischen Code ermittelt und als Ansteuergröße an eine Ansteuereinheit der Projektionsfläche übermittelt wird,
wobei in einem ersten Verfahrensschritt mittels des Bildverarbeitungssystems (100) die räumliche Lage eines senkrecht auf dem Flächenschwerpunkt des Codes stehenden Normalenvektors (N+) ermittelt wird,
der Normalenvektor (N+) in einem zweiten Verfahrensschritt durch Verschieben und Kippen der Trägerebene (HE) auf den Zielpunkt (Z) ausgerichtet wird,
und in einem dritten Verfahrensschritt mittels des Bildverarbeitungssystems (100) eine Rotationsbewegung (R) der Trägerebene (HE) um eine zur Trägerebene (HE) senkrechte Drehachse erfasst und in Abhängigkeit von einer erfassten Rotationsbewegung (R) ein Aktivierungssignal der Zeigevorrichtung (5) erzeugt wird.

2. Verfahren zur Interaktion einer Zeigevorrichtung (5) mit einem auf einer Projektionsfläche eines virtuellen Desktops angeordneten Zielpunkt (Z) nach Patentanspruch 1, **dadurch gekennzeichnet, dass** im dritten Verfahrensschritt zusätzlich die Drehrichtung der Rotationsbewegung (R) der Trägerebene (HE) des Codes um eine zur Trägerebene (HE) senkrechte Drehachse erfasst und in Abhängigkeit von der erfassten Drehrichtung der Rotationsbewegung (R) unterschiedliche Aktivierungssignale der Zeigevorrichtung (5) erzeugbar sind.

## Claims

1. Method for interaction of a pointing device (5) with a target point (Z) arranged on a projection surface of a virtual desktop,
**characterised in that**
the spatial coordinate of the target point (Z) is determined by means of an image processing system (100) from a two-dimensional optical code applied to a carrier plane (HE) belonging to the pointing device (5) and transmitted as a control variable to a control unit of the projection surface,
wherein in a first method step the spatial position of a normal vector (N+) perpendicular to the centroid of the code is determined by means of the image processing system (100),
the normal vector (N+) is aligned with the target point (Z) in a second method step by shifting and tilting of the support plane (HE),
and in a third method step a rotational movement (R) of the carrier plane (HE) about an axis of rotation perpendicular to the carrier plane (HE) is detected by means of the image processing system (100) and, depending on a detected rotational movement (R), an activation signal of the pointing device (5) is generated.

2. Method for interaction of a pointing device (5) with a target point (Z) arranged on a projection surface of a virtual desktop according to claim 1, **characterised in that** in the third method step the direction of rotation of the rotational movement (R) of the carrier plane (HE) of the code about an axis of rotation perpendicular to the carrier plane (HE) is additionally detected and different activation signals of the pointing device (5) can be generated, depending on the detected direction of rotation of the rotational movement (R).

## Revendications

1. Procédé pour l'interaction d'un dispositif de pointage (5) avec un point cible (Z) disposé sur une surface de projection d'un bureau virtuel,
**caractérisé en ce que**
la coordonnée spatiale du point cible (Z) est déterminée au moyen d'un système de traitement d'images (100) à partir d'un code optique bidimensionnel appliqué sur un plan porteur (HE) appartenant au dispositif de pointage (5) et est transmise comme grandeur de commande à une unité de commande de la surface de projection,
dans lequel la position spatiale d'un vecteur normal (N+) perpendiculaire au centre de gravité de surface du code est déterminée au moyen du système de traitement d'images (100) dans une première étape de procédé, le vecteur normal (N+) est aligné par décalage et inclinaison du plan porteur (HE) vers le point cible (Z) dans une seconde étape de procédé,
et, dans une troisième étape de procédé, un mouvement de rotation (R) du plan porteur (HE) autour d'un axe de rotation perpendiculaire au plan porteur (HE) est détecté au moyen du système de traitement d'images (100) et un signal d'activation du dispositif de pointage (5) est généré en fonction d'un mouvement de rotation (R) détecté.

2. Procédé pour l'interaction d'un dispositif de pointage (5) avec un point cible (Z) disposé sur une surface de projection d'un bureau virtuel selon la revendication 1, **caractérisé en ce que**, dans la troisième étape de procédé, le sens de rotation du mouvement de rotation (R) du plan porteur (HE) du code autour d'un axe de rotation perpendiculaire au plan porteur (HE) est en outre détecté et différents signaux d'activation du dispositif de pointage (5) peuvent être générés en fonction du sens de rotation détecté du mouvement de rotation (R).
